Europäisches Patentamt

European Patent Office

Office européen des brevets

(19)

(11) Numéro de publication: **0 094 896**

**B1**

(12) **FASCICULE DE BREVET EUROPEEN**

(45) Date de publication du fascicule du brevet: **20.07.88**

(51) Int. Cl.⁴: **H 04 N 5/76, H 01 R 31/06**

(21) Numéro de dépôt: **83440004.6**

(22) Date de dépôt: **12.01.83**

(54) **Adapteur vidéo.**

(30) Priorité: **13.05.82 FR 8208744**
**27.09.82 FR 8216499**

(43) Date de publication de la demande:
**23.11.83 Bulletin 83/47**

(45) Mention de la délivrance du brevet:
**20.07.88 Bulletin 88/29**

(84) Etats contractants désignés:
**AT BE CH DE GB IT LI LU NL SE**

(56) Documents cités:
**DE-A-3 022 363**
**FR-A-2 069 230**
**US-A-4 088 384**
**US-A-4 188 644**
**US-A-4 276 562**

**ELECTRONICS INTERNATIONAL, vol. 54, no. 9, mai 1981, pages 81-82, New York, USA; K. DREYFACK: "French homes to get their own data bus"**

(73) Titulaire: **Ateliers SANDVALE, Sàrl**
**33, rue des Jardins**
**F-68000 Colmar (FR)**

(72) Inventeur: **Sandmann, Rodolphe**
**10, rue du Marché**
**F-68600 Neuf-Brisach (FR)**

(74) Mandataire: **Nuss, Pierre**
**10, rue Jacques Kablé**
**F-67000 Strasbourg (FR)**

(56) References cited:
**FUNKSCHAU, no. 9, avril 1982, pages 88-89, Munich, DE; B. KRIEG: "Japanischer Videorecorder - deutsches Fernsehgerät Video-Anschlussgerät"**

Courier Press, Leamington Spa, England.

EP 0 094 896 B1

## Description

La présente invention concerne le domaine des dispositifs de connexion entre magnétoscope et téléviseur ou entre plusieurs magnétoscopes et permettant des opérations d'enregistrement ou de reproduction, et a pour objet un adaptateur vidéo destiné à cet effet.

Actuellement, la connexion entre un téléviseur et un magnétoscope en vue de l'enregistrement, ou entre deux magnétoscopes est généralement effectuée au moyen de cordons de raccordement présentant à leurs extrémités des connecteurs. Cependant, l'utilisation de tels cordons ne permet qu'une seule opération, et tout changement d'opération, par exemple le passage d'un enregistrement à une reproduction, nécessite une modification des connexions, soit au moyen d'un deuxième cordon, soit par déconnexion et reconnexion du cordon.

En outre, on connaît par Praxis et Hobby, FUNKSCHAU n° 9, avril 1982, page 88, Munich, un boîtier servant à relier un magnétoscope muni de fiches BNC (Vidéo) et CINCH (Audio) à un téléviseur muni d'une fiche Vidéo 6 broches. Avec ce boîtier, le magnétoscope ne sert que de lecteur par rapport au téléviseur, par pontage de 2 broches, l'enregistrement se faisant directement en HF par l'antenne.

Pour éviter un retour de son du téléviseur sur le magnétoscope pendant l'enregistrement d'un programme différent de celui passant sur le téléviseur, un amplificateur servant également de séparateur (en inverse) est placé sur la broche Audio. Cet amplificateur sert également à rehausser le niveau Audio lors d'une lecture de cassette.

Un tel boîtier, qui est de constitution complexe, n'est, cependant, pas utilisable comme un simple adaptateur fonctionnant en circuit passif. En effet, ce boîtier connu fonctionne en Vidéo pour la lecture et en HF pour l'enregistrement, avec une partie active sur l'Audio.

La présente invention a pour but de pallier ces inconvénients.

Elle a, en effet, pour objet un adaptateur vidéo caractérisé en ce qu'il est constitué par un socle comportant au moins 6 broches pour le branchement direct sur un téléviseur, sur un magnétoscope ou sur un adaptateur analogue au moyen d'un cordon intermédiaire 6 broches/6 broches ou plus, et qui est muni d'un circuit imprimé, et par deux paires de cordons munis chacun d'un connecteur, chaque paire étant destinée à un ensemble entrée-sortie à deux voies, respectivement du son et de l'image des magnétoscopes, ces cordons étant soudés sur le circuit imprimé du socle, le circuit imprimé pouvant être équipé d'un inverseur de branchement pour brancher plusieurs magnétoscopes entre eux.

Conformément à une variante de réalisation de l'invention, le socle est muni d'un porte-contact pouvant être équipé d'un nombre quelconque de contacts enfichables qui sont reliés par un câblage aux broches de branchement, directement ou par l'intermédiaire d'un inverseur de branchement, de manière à réaliser un adaptateur de péritélévision, ou autre.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:

la figure 1 est une vue en plan d'un adaptateur conforme à l'invention, et

la figure 2 est une vue en coupe d'une variante de réalisation de l'invention.

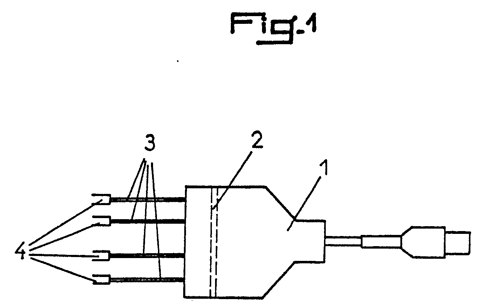

L'adaptateur vidéo représenté, à titre d'exemple, à la figure 1 des dessins annexés est constitué d'un socle 1 comportant au moins 6 broches permettant le branchement direct sur un téléviseur ou sur un cordon intermédiaire, et qui est muni d'un circuit imprimé 2, et par deux paires de cordons 3, qui sont pourvus chacun d'un connecteur 4 de branchement sur un magnétoscope. Ces paires de cordons 3 sont prévues chacune pour former un ensemble entrée-sortie respectivement pour le son et l'image, et chaque cordon 3 est soudé sur le circuit imprimé 2 du socle 1.

Le circuit imprimé 2 permet la modulation du son et/ou de l'image, en fonction de l'appareil auquel est relié l'adaptateur, au moyen de composants électroniques tels que des résistances, et analogues.

Conformément à une autre caractéristique de l'invention, le socle 1 peut avantageusement être équipé d'un inverseur du branchement du circuit imprimé 2. Il est ainsi possible de réaliser une copie de bande à bande par simple actionnement dudit inverseur.

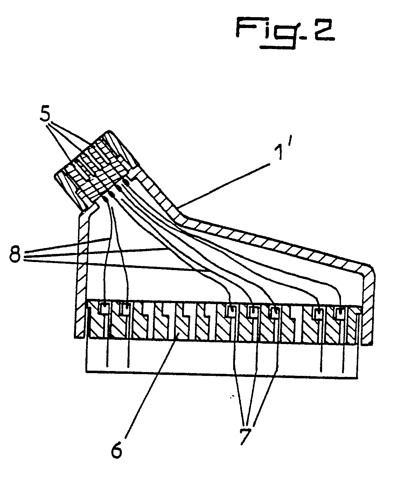

Selon une variante de réalisation de l'invention, et comme le montre la figure 2 des dessins annexés, l'adaptateur comporte un socle 1' à broches 5, qui est muni d'un porte-contact 6 peut muni d'un porte-contact 6 permettant la montage d'un nombre quelconque de contacts enfichables 7. Ces contacts 7 sont reliés par un câblage 8 aux broches de branchement 5, soit directement, comme indiqué sur la figure 2, soit par l'intermédiaire d'un inverseur de branchement.

L'adaptateur ainsi constitué peut être branché directement sur la prise péritélévision d'un téléviseur et former un adaptateur de péritélévision, de branchement de magnétoscope, de terminal informatique ou de décodeur, son socle pouvant être branché sur un cordon intermédiaire présentant un nombre de broches enfichables correspondant. Cet adaptateur peut évidemment également être utilisé dans des circuits autres que des circuits vidéo, tels que vidéotest, télématique, télé-informatique, etc.

Conformément à une autre caractéristique de l'invention, le socle 1 de l'adaptateur vidéo, ainsi que le socle 1' de l'adaptateur de péritélévision, ou autre peuvent être pourvus d'un nombre quelconque de broches ou de contacts de branchement. Ainsi, ces adaptateurs peuvent être utilisés en correspondance avec tous les types de cordons intermédiaires enfichables.

Grâce à l'invention, il est possible de réaliser un branchement définitif de l'adaptateur sur le magnétoscope pour réaliser toutes les opérations, à savoir l'enregistrement par branchement direct ou la copie par branchement sur unadaptateur analogue inversé d'un autre magnétoscope. En outre, il est également possible de réaliser l'économie d'un nombre relativement important de câbles de connexions usuels actuellement et spécifiques chacun à une utilisation donnée.

En outre, il est également possible de réaliser un branchement direct d'un système de péritélévision, ou autre système de connexion, sans nécessiter un montage complexe, tel que soudure ou verrouillage des fils d'un câble multicontact sur la fiche, au moyen d'un câble de liaison unique facilement interchangeable.

**Revendications**

1. Adaptateur vidéo caractérisé en ce qu'il est constitué par un socle (1) comportant au moins 6 broches pour le branchement direct sur un téléviseur ou magnétoscope ou sur un adaptateur analogue au moyen d'un cordon intermédiaire 6 broches/6 broches ou plus, et qui est muni d'un circuit imprimé (2), et par deux paires de cordons (3) munis chacun d'un connecteur (4), chaque paire étant destinée à un ensemble entrée-sortie, à deux voies, respectivement du son et de l'image des magnétoscopes, ces cordons (3) étant soudés sur le circuit imprimé (2) du socle (1), le circuit imprimé étant équipé d'un inverseur de branchement pour brancher plusieurs magnétoscopes entre eux.

2. Adaptateur suivant la revendication 1, caractérisé en ce que le socle (1') est muni d'un porte-contact (6) pouvant être équipé d'un nombre quelconque de contacts enfichables (7) qui sont reliés par un câblage (8) aux broches de branchement (5), directement ou par l'intermédiaire d'un inverseur de branchement, de manière à réaliser un adaptateur de péritélévision, de branchement de magnétoscope, de terminal informatique, ou de décodeur.

**Patentansprüche**

1. Video-Adapter, dadurch gekennzeichnet, daß er aus einem mindestens 6 Steckerstifte für den direkten Anschluß mit Hilfe einer Zwischenschnur mit 6 Stiften/6 Stiften oder mehr an ein Fernsehder Videogerät oder an einen ähnlichen Adapter besitzenden Sockel (1), und der mit einer gedruckten Schaltung (2) versehen ist, und aus zwei jeweils mit einem Stecker (4) versehenen Schnurpaaren (3), wobei jedes Paar für eine Eingabe-Ausgabe-Einheit mit zwei Kanälen, jeweils für Ton und Bild der Videogeräte bestimmt ist, diese Schnüre (3) auf eine gedruckte Schaltung (2) des Sockels (1) geschweißt sind, wobei die gedruckte Schaltung mit einem Abzweig-Inverter für den Anschluß mehrerer Videogeräte untereinander ausgestattet ist, besteht.

2. Adapter nach Anspruch 1, dadurch gekennzeichnet, daß der Sockel (1') mit einem Kontaktträger (6) versehen ist, der mit einer beliebigen Anzahl einsteckbarer Kontakte (7) ausgestattet werden kann, welche über eine Verdrahtung (8) direkt oder mit Hilfe eines Abzweig-Inverters mit den Anschlußstiften (5) verbunden sind, so daß ein Adapter für die mittlere Fernsehtechnik, Videoanschluß, Datenterminal oder Dekodierer zustande kommt.

**Claims**

1. A video adapter characterised in that it consists of a base (1) comprising at least 6 pins for direct connection to a television receiver or video tape recorder or to a similar adapter by means of a 6-pin/6-pin or more intermediate cord, and which is equipped with a printed circuit (2), and of two pairs of cords (3) each equipped with a connector (4), each pair being intended for an input-output assembly with two channels respectively for the sound and for the picture of the video tape recorders, these cords (3) being soldered to the printed circuit (2) of the base (1) and the printed circuit being equipped with a connection reverser for connecting a plurality of video tape recorders to one another.

2. An adapter according to Claim 1, characterised in that the base (1') is equipped with a contact holder (6) which can be equipped with any number of plug-in contacts (7) which are connected by wiring (8) to the connecting pins (5), either directly or by means of a connection reverser, in such a manner as to produce an adapter for peripheral television units, for connection of a video tape recorder, for an information terminal or for a decoder.

# Fig.1

Fig. 2